Europäisches Patentamt

European Patent Office

Office européen des brevets

(19)

(11) Veröffentlichungsnummer: **0 302 333**
**A1**

(12) # EUROPÄISCHE PATENTANMELDUNG

(21) Anmeldenummer: 88111918.4

(51) Int. Cl.⁴: **B23K 11/06**

(22) Anmeldetag: 23.07.88

(30) Priorität: 03.08.87 CH 2968/87

(43) Veröffentlichungstag der Anmeldung:
**08.02.89 Patentblatt 89/06**

(84) Benannte Vertragsstaaten:
**AT BE DE ES FR GB GR IT NL SE**

(71) Anmelder: **Fael S.A.**
**17, rue de la Musinière**
**CH-2072 Saint-Blaise(CH)**

(72) Erfinder: **Brauman, Jörg**
**Freiburgstrasse 66**
**CH-3280 Murten(CH)**
Erfinder: **Lisinski, David**
**Jura 10**
**CH-2525 Le Landeron(CH)**

(74) Vertreter: **Scheidegger, Zwicky, Werner & Co.**
**Stampfenbachstrasse 48 Postfach**
**CH-8023 Zürich(CH)**

(54) **Vorrichtung für die Schutzgaszufuhr an einer Widerstandsrollennaht-Schweissmaschine.**

(57) Die Vorrichtung weist zwei koaxial zueinander angeordnete Rohre (8,9) mit einem Ringraum (20) zwischen den Rohren auf, von denen das äussere Rohr (8) in einem Gehäuse (10) gehalten ist, welches das Rohr (8) so umschliesst, dass zwischen diesem und dem Gehäuse ein Schutzgas-Eintrittsraum (11) vorhanden ist. Von diesem strömt das Schutzgas durch einen Ausschnitt (23) im äusseren Rohr (9) sowie im inneren Rohr (8) in dessen Innenraum (24) und zum vorderen Ende, an welchem durch eine Austrittsöffnung (18) im äusseren Rohr ein erster Teilstrom aus der Vorrichtung gegen die Schweissstelle (3) austritt. Ein zweiter Teilstrom tritt durch einen Längsschlitz (16) im äusseren Rohr (8) an dessen Unterseite aus und ist gegen die Schweissnaht (7) des Werkstücks (6) gerichtet, das unterhalb der Vorrichtung entlang transportiert wird. Der zweite Teilstrom ist aus dem im Innenraum (24) des inneren Rohrs (9) strömenden Schutzgas abgezweigt und strömt durch einen Wandausschnitt (26) im äusseren Rohr (8) von oben nach entgegengesetzten Seiten durch den Ringraum (20) zwischen den beiden Rohren (8,9) und dadurch von gegenüberliegenden Seiten unter einem schrägen Winkel gegen die Schweissnaht (7) des Werkstücks (6). Man erzielt mit der Vorrichtung eine selbsttätige Mengenverteilung bei optimal ausgerichteter Anströmung und sparsamem Gasverbrauch.

Fig. 1

## Vorrichtung für die Schutzgaszufuhr an einer Widerstandsrollennaht-Schweissmaschine

Die Erfindung betrifft eine Vorrichtung für die Schutzgaszufuhr an einer WiderstandsrollennahtSchweissmaschine zur Herstellung von Schweissnähten an entlang der hinter der Schweissstelle angeordneten Schutzgaszufuhrvorrichtung transportierten Werkstücken.

Wegen der an der Schweissstelle zwischen den Elektrodenrollen einer Widerstandsrollennaht-Schweissmaschine auftretenden hohen Temperatur von über 1000°C wird zur Verhinderung der Oxydation der Schweissnahtoberfläche mit Schutzgas gearbeitet, welches die Schweissnaht umgeben soll, wobei sich der Bereich wegen des Weitertransports der Werkstücke schwer abdichten lässt und somit bei den bisherigen Einrichtungen dieser Art als wesentlicher Nachteil eine ziemlich hoher Verbrauch an Schutzgas resultiert.

Der Erfindung lag daher die Aufgabe zugrunde, den Verbrauch an Schutzgas zu reduzieren, und dabei der Schweissstelle zugeführtes Schutzgas und längs der Schweissnaht zugeführtes Schutzgas unterschiedlich dosiert zuzuführen und in geeignetem Anströmwinkel, was auch die Schutzgasmenge zu reduzieren erlaubt.

Zur Lösung dieser Aufgabe dienen die Massnahmen gemäss Anspruch 1. Der Vorteil besteht in dem auf diese Weise erreichten sehr geringen Gasverbrauch bei einer selbsttätigen Mengenverteilung auf die Stellen des Bedarfs an der Schweissstelle und längs der Schweissnaht. Ein weiterer Vorteil bei einer bevorzugten Ausgestaltung der Vorrichtung, die ein äusseres und ein inneres Rohr umfasst, besteht auch darin, dass durch die Umlenkung des Gastroms von der Mitte nach beiden Seiten durch den Ringraum zwischen den beiden Rohren mit Austritt durch einen Längsschlitz im äusseren Rohr das Schutzgas schräg von gegenüberliegenden Seiten unter einem optimalen Auftreffwinkel gegen die Schweissnaht strömt. Man erreicht eine optimale Berieselung der Schweissnaht mit Schutzgas, das neben der Funktion der Verhinderung der Oxydation auch die Funktion hat, die Schweissnaht zu kühlen.

In weiterer Ausgestaltung kann alternativ zusätzlich zu den beiden gegen die Schweissstelle und gegen die Schweissnaht gerichteten Teilströmen auch noch ein dritter Teilstrom vorgesehen werden, der auch gegen die Schweissnaht gerichtet ist und die Aufgabe hat, einen Schutzschirm aus Schutzgas gegen die in dem Transportsystem für die Werkstücke eingebaute Luftkühlung zu bilden, welche die Werkstücke anschliessend an die Schweissung passieren, um mit diesem Schutzschirm zu verhindern, dass die Luftkühlung in dem Bereich der Oxydationsverhinderung durch Schutzgas einwirkt. Durch Innenwände und die Durchflussmenge begrenzende Durchlassöffnungen der Vorrichtung lässt sich für diesen Zweck die Schutzgasmenge gering dosieren. Alle diese Möglichkeiten sind in einer gemeinsamen Vorrichtung realisiert.

Ein Ausführungsbeispiel der Erfindung wird nachfolgend anhand der Zeichnungen näher erläutert. Es zeigen:

Fig. 1 einen Längsschnitt durch die Vorrichtung schematisch und in grösserem Massstab, im montierten Zustand hinter der Schweissstelle;

Fig. 2 einen Längsschnitt durch das Gehäuse als Teil der Vorrichtung;

Fig. 3 eine Ansicht auf das Gehäuse gemäss Fig. 2 in Pfeilrichtung A;

Fig. 4 eine Draufsicht auf das Gehäuse gemäss Fig. 2;

Fig. 5 einen Querschnitt durch das Gehäuse längs der Linie 2-2 in Fig. 2;

Fig. 6 das äussere Rohr als Teil der Vorrichtung, von der Unterseite gesehen;

Fig. 7 einen Längsschnitt durch das äussere Rohr in um 180° gedrehter Stellung;

Fig. 8 eine Ansicht auf die Stirnseite des äusseren Rohrs gemäss Fig. 7;

Fig. 9 eine Seitenansicht des inneren Rohrs als Teil der Vorrichtung;

Fig. 10 eine Draufsicht von oben auf das innere Rohr gemäss Fig. 9.

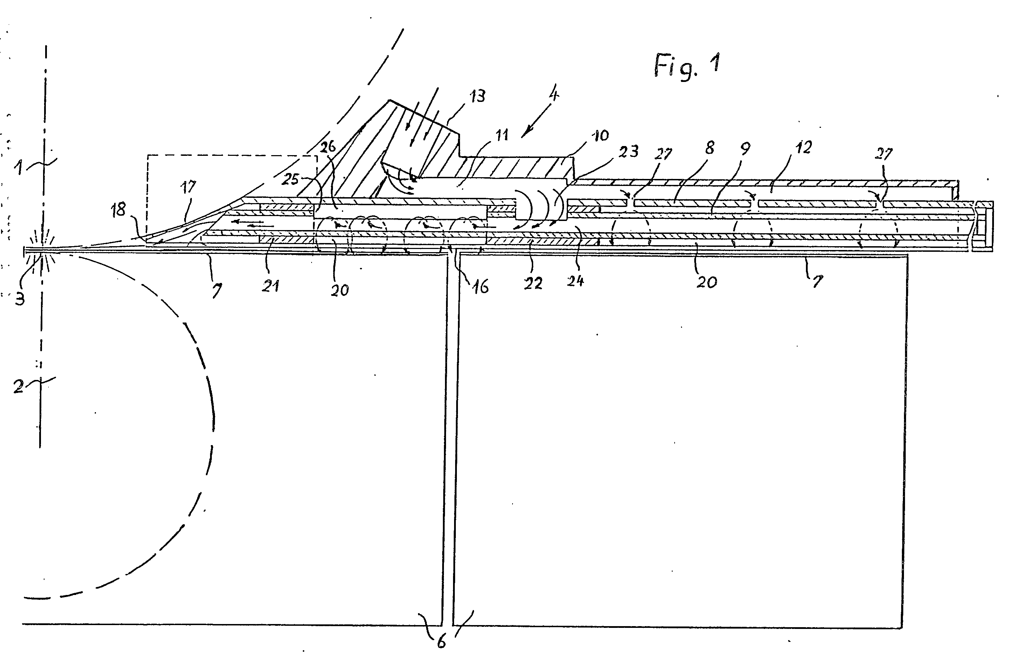

In Fig. 1 ist die Vorrichtung im Zusammenbau dargestellt und schematisch die Anordnung der Vorrichtung an einer Widerstandsrollennaht-Schweissmaschine gezeigt, zwischen deren beiden Elektrodenrollen 1 und 2 sich die Schweissstelle 3 befindet, zu der hin die insgesamt mit 4 bezeichnete Vorrichtung sich mit ihrem keilförmig verjüngenden vorderen Ende 5 erstreckt. Zwischen den beiden Elektrodenrollen 1 und 2 hindurch werden nacheinander Werkstücke 6 transportiert, beispielsweise Blechzargen für Dosenkörper, an denen zwecks Verbindung sich überlappen der Blechränder mittels der Elektrodenrollen 1 und 2 eine Schweissnaht 7 hergestellt wird. Die Werkstücke 6 bewegen sich mit der Schweissnaht 7 unmittelbar unter der Vorrichtung 4 parallel zu dieser in Fig. 1 von links nach rechts mittels einer nicht dargestellten Transportvorrichtung.

Die Vorrichtung 4 besteht im wesentlichen aus zwei zueinander konzentrisch angeordneten Rohren 8 und 9 sowie einem das äussere Rohr 8 aufnehmenden Gehäuse 10, welches das äussere Rohr 8 mit Ausnahme der Unterseite umschliesst, um das Rohr 8 festzuhalten, und an der Oberseite sich im Abstand von dem Rohr erstreckt, um einen Gaseintrittsraum 11 zu bilden, der sich etwa von der Gehäuse-Längsmitte aus in einen im Querschnitt etwas kleineren Kanal 12 fortsetzt. Der Gaseintrittsraum 11 ist an der Oberseite 13 des Gehäuses an eine in der Zeichnung nicht dargestellte Zuleitung für das Schutzgas angeschlossen, welches in der Pfeilrichtung in den Gaseintrittsraum 11 und in den sich anschliessenden etwas engeren Kanal 12 strömt.

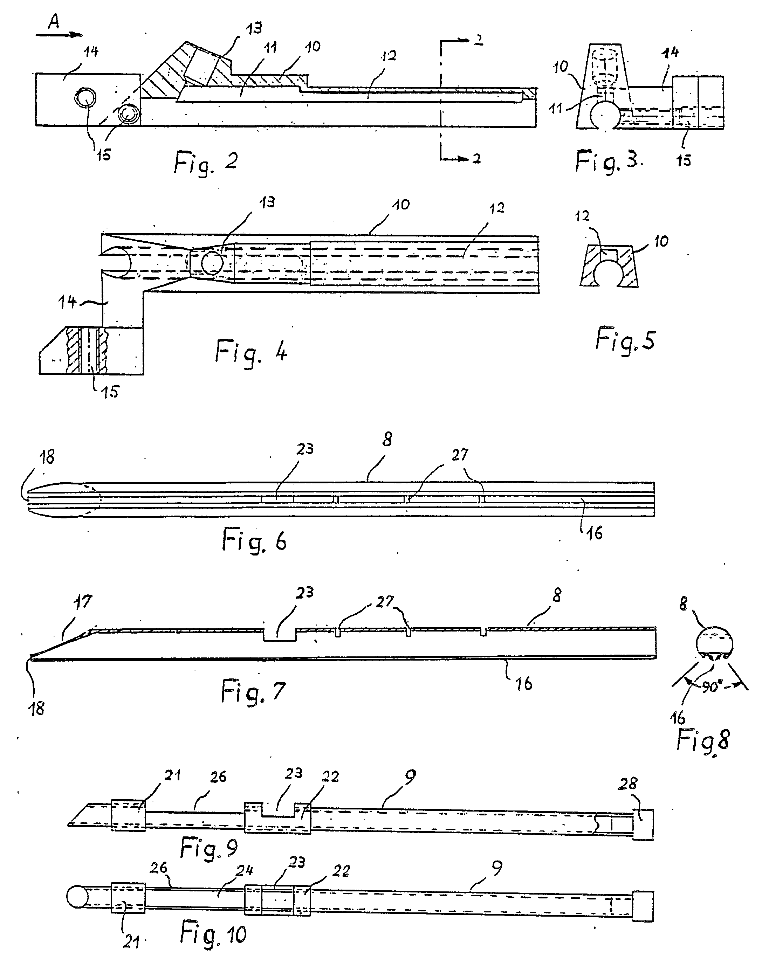

Das Gehäuse 10 ist ohne die beiden Rohre 8 und 9 in den Figuren 2 bis 5 dargestellt und aus den Figuren 3 und 5 ist erkennbar, dass die im Querschnitt kreisförmige Innenseite des Gehäuses 10 so ausgebildet ist, dass sie das zylindrische äussere Rohr 8 mit Ausnahme der Rohrunterseite umschliesst. Am vorderen Ende weist das Gehäuse 10 einen seitlichen Flansch 14 mit zwei Gewindebohrungen 15 auf, um die Vorrichtung an der Schweissmaschine zu befestigen und um das äussere Rohr 8 am Gehäuse 10 festzuklemmen.

Das in Fig. 6 bis 8 allein dargestellte äussere Rohr 8 weist an seiner Unterseite, die vom Gehäuse 10 nicht umschlossen ist, einen über die ganze Rohrlänge sich erstreckenden Längsschlitz 16 auf, der sich einwärts zur Rohrachse hin verjüngt, wie aus Fig. 8 zu erkennen ist, so dass die beiden Flanken des sich verjüngenden Schlitzes 16 einen Winkel von etwa 90° einschliessen. In Fig. 6 ist das äussere Rohr 8 von der Unterseite aus gesehen dargestellt. Das der Schweissstelle 3 zugekehrte vordere Ende des äusseren Rohrs 8 ist keilförmig zugespitzt ausgebildet und in der schrägen Stirnwand 17 bildet unten das Ende des Längsschlitzes 16 die Austrittsöffnung 18 für einen ersten gegen die Schweissstelle 3 gerichteten Teilstrom des Schutzgases.

Aus Fig. 1 geht hervor, dass zwischen dem äusseren Rohr 8 und dem inneren Rohr 9 ein Ringraum 20 vorhanden ist. Im Abstand vom vorderen Ende der Vorrichtung ist in diesem Ringraum ein erster Rohrabschnitt 21 und etwa auf der Mitte der Vorrichtung ein zweiter Rohrabschnitt 22 angeordnet, durch welche beiden in den Ringraum 20 genau hineinpassende Rohrabschnitte 21 und 22 das äussere Rohr 8 und das innere Rohr 9 koaxial zueinander gehalten werden. Diese Rohrabschnitte 21 und 22 bilden zugleich innere Trennwände für verschiedene Abschnitte der Vorrichtung. Im Bereich des Rohrabschnitts 22 sind das äussere Rohr 8, der Rohrabschnitt 22 und das innere Rohr 9 ausgeschnitten und dieser fast bis zur Rohrmitte reichende Ausschnitt 23 stellt eine Verbindung von dem Gaseintrittsraum 11 zum Innenraum 24 im inneren Rohr 9 dar. Das Schutzgas gelangt somit in das innere Rohr 9 und bis zum vorderen Ende zur Austrittsöffnung 18, die gegen die Schweissstelle 3 gerichtet ist.

Der zwischen den beiden Rohren 8 und 9 angeordnete vordere Rohrabschnitt 21 und der etwa auf der Längsmitte angeordnete ausgeschnittene Rohrabschnitt 22 begrenzen einen Rohrbereich 25, in welchem das innere Rohr 9 auf der dem Längsschlitz 16 im äusseren Rohr 8 gegenüberliegenden Seite ausgeschnitten ist, wobei dieser Ausschnitt 26 sich über den ganzen Rohrbereich 25 zwischen dem Rohrabschnitt 21 und dem Rohrabschnitt 22 erstreckt. Das Schutzgas strömt dadurch aus dem inneren Rohr 9 nach beiden Seiten in den Ringraum 20 zwischen den beiden Rohren nach unten und aus dem Längsschlitz 16 im äusseren Rohr 8 hinaus und wird durch die Umlenkung in dem Ringraum so geführt, dass die Schweissnaht 7 am Werkstück 6 schräg von zwei gegenüberliegenden Seiten angeströmt wird. Damit wird eine optimale Nahtberieselung mit Schutzgas unter einem optimalen Auftreffwinkel erreicht.

Die Vorrichtung mit der gegen die Schweissstelle 3 gerichteten vorderen Austrittsöffnung 18 und der gegen die Schweissnaht 7 des Werkstücks 6 gerichteten Austrittsöffnung in Form des Längsschlitzes 16 ermöglicht eine dosierte Anströmung der Schweissnaht bis zur Schweissstelle bei sparsamem Verbrauch. Die in Fig. 1 dargestellte Ausführungsform der Vorrichtung kann in einer abgeänderten Ausführungsform etwa auf der Längsmitte gemäss Fig. 1 enden, so dass der in Fig. 1 rechte Teil fehlt. Es ist aber sehr vorteilhaft, wenn der Schutzgasbereich gegen den in Transportrichtung sich anschliessenden Bereich, in welchem die Schweissnaht mit Luft gekühlt wird, abgeschirmt ist, und es ist daher vorteilhaft, die Vorrichtung länger auszubilden wie in den Zeichnungen dargestellt ist und einen weiteren Bereich für eine noch geringer dosierte Schutzgaszufuhr zum Kühlen der Schweissnaht anzuschliessen. Zu diesem Zweck weist das äussere Rohr 8 in der in Transportrichtung der Werkstücke 6 hinteren Hälfte an der dem über die ganze Rohrlänge sich erstreckenden Längsschlitz 16 gegenüberliegenden Seite in Längsabständen voneinander Durchlassöffnungen 27 auf, die den im Gehäuse 10 ausgebildeten Kanal 12, der mit dem Gaseintrittsraum 11 in Verbindung steht, mit dem Ringraum 20 zwischen dem inneren Rohr 9 und dem äusseren Rohr 8 verbinden. Die hier hindurch strömende Schutzgasmenge ist je nach der Dimensionierung dieser Durchlassöffnungen 27 nur noch gering, durchströmt den ganzen Ringraum 20 und tritt aus dem Längsschlitz 16 aus, so dass mit nur noch geringer Schutzgasmenge ein Abschirmungsbereich gegen hinzutretende Luft geschaffen ist. Ein Rohrabschluss 28 am Ende des inneren Rohrs 9 verschliesst dieses Rohr und gleichzeitig den Ringraum 20 zwischen dem inneren und dem äusseren Rohr 8.

## Ansprüche

1. Vorrichtung für die Schutzgaszufuhr an einer Widerstandrollennaht-Schweissmaschine zur Herstellung von Schweissnähten an längs der hinter der Schweissstelle angeordneten Schutzgaszufuhrvorrichtung transportierten Werkstücken, dadurch gekennzeichnet, dass die in der Transportrichtung der Werkstücke (6) sich längs erstreckende Vorrichtung (4) Innenwände (8,9,21,22) und getrennte Austrittsöffnungen (16,18) zur Aufteilung des in einen an eine Zuleitung angeschlossenen Gaseintrittsraum (11) eintretenden Schutzgases in mindestens zwei im Abstand voneinander austretende Teilströme aufweist, von denen der eine Teilstrom direkt gegen die Schweissstelle (3) und der andere Teilstrom gegen die Schweissnaht (7) des weiter transportierten Werkstückes (6) gerichtet ist.

2. Vorrichtung nach Anspruch 1, dadurch gekennzeichnet, dass sie in Transportrichtung der Werkstücke (6) im Abstand anschliessend an eine erste Austrittsöffnung (16) für den Austritt des gegen die Schweissnaht (7) gerichteten Schutzgas-Teilstroms eine ebenfalls gegen die Schweissnaht (7) zugekehrte zweite Austrittsöffnung (16) und Innenwände (8,9,21,22) mit die Durchflussmenge begrenzenden Durchlassöffnungen (27) für einen dritten Schutzgas-Teilstrom aufweist und beide Oeffnungen (16) von einer durch eine Zwischenwand (22) unterteilten durchgehenden Austrittsöffnung (16) in der Vorrichtung gebildet sind, welche für mehr als zwei Schutzgas-Teilströme länger ausgebildet ist.

3. Vorrichtung nach Anspruch 1, dadurch gekennzeichnet, dass sie im wesentlichen aus zwei konzentrisch ineinander angeordneten Rohren (8,9), die durch im Ringraum (20) zwischen diesen angeordnete Rohrabschnitte (21,22) koaxial zueinander gehalten sind, und einem das äussere Rohr (8) aufnehmenden Gehäuse (10) besteht, in welchem ein über einen Teil der Länge des äusseren Rohres (8) sich erstreckender Hohlraum (11) als Gaseintrittsraum ausgebildet ist und welches Gehäuse (10) an eine Gaszuleitung angeschlossen und mit einem Flansch (14) zum Befestigen der Vorrichtung (4) versehen ist.

4. Vorrichtung nach Anspruch 3, dadurch gekennzeichnet, dass das äussere Rohr (8) einen achsparallelen und einwärts sich verjüngenden Längsschlitz (16) als Austrittsöffnung für den Austritt des Schutzgases gegen die Schweissnaht (7) aufweist, dass auf der dem Längsschlitz (16) gegenüberliegenden Seite, etwa auf der Rohrlängsmitte, das äussere Rohr (8) sowie das innere Rohr (9) und ein im Bereich der Längsmitte zwischen äusserem und innerem Rohr angeordneter Rohrabschnitt (22) ausgeschnitten (23) sind, durch welchen Ausschnitt (23) der Gaseintritts-Hohlraum (11) im Gehäuse (10) für den Gaseintritt mit dem Innenraum (24) des inneren Rohrs (9) in Verbindung steht, dass das äussere Rohr (8) an der Stirnseite geschlossen und das innere Rohr (9) an der Stirnseite offen ist und im äusseren Rohr (8) das Ende des Längsschlitzes (16) die Austrittsöffnung (18) für den ersten gegen die Schweissstelle (3) gerichteten Schutzgas-Teilstrom bildet, dass ein nahe dieses Rohrendes angeordneter weiterer Rohrabschnitt (21) zwischen äusserem und innerem Rohr und der etwa auf der Rohrlängsmitte angeordnete Rohrabschnitt (22) einen Rohrbereich (25) begrenzen, in welchem das innere Rohr (9) auf der dem Längsschlitz (16) im äusseren Rohr (8) gegenüberliegenden Seite ausgeschnitten (26) ist, um einen zweiten Teilstrom des Schutzgases durch diesen Ausschnitt (26) und den Ringraum (20) zwischen äusserem und innerem Rohr (8,9) sowie den Längsschlitz (16) im äusseren Rohr gegen die Schweissnaht (7) austreten zu lassen.

5. Vorrichtung nach Anspruch 4, dadurch gekennzeichnet, dass das äussere Rohr (8) am Stirnende (17) nahezu keilförmig mit der Austrittsöffnung (18) an der Keilspitze ausgebildet ist.

6. Vorrichtung nach Anspruch 2 und 3, dadurch gekennzeichnet, dass von den zwei zueinander konzentrischen Rohren (8,9) das äussere Rohr (8) in seiner in Transportrichtung der Werkstücke (6) hinteren Hälfte einen achsparallelen Längsschlitz (16) als Oeffnung für den Austritt des Schutzgases gegen die Schweissnaht (7) und an der dem Längsschlitz gegenüberliegenden Seite in Längsabständen voneinander Durchlassöffnungen (27) für den Durchtritt des dritten Teilstroms des Schutzgases in den Ringraum (20) zwischen dem inneren und äusseren Rohr (8,9) und den Austritt durch den Längsschlitz (16) aufweist und dass das Gehäuse (10) oberhalb der Durchlassöffnungen (27) einen mit dem den Gaseintrittsraum bildenden Hohlraum (11) in Verbindung stehenden Kanal (12) aufweist, der sich bis über die letzte Durchlassöffnung (27) erstreckt.

Fig. 1

EP 0 302 333 A1

Fig. 2

Fig. 3

Fig. 4

Fig. 5

Fig. 6

Fig. 7

Fig. 8

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN Band 5, Nr. 43 (M-60) (715), 23. März 1981; & JP - A - 56 1281 (TOYO SEIKAN K.K.) 08.01.1981 --- | 1 | B 23 K 11/06 |
| Y | PATENT ABSTRACTS OF JAPAN Band 4, Nr.150, Seite 158M37, 22. Oktober 1980; & JP - A - 55 103 284 (TOYO SEIKAN K.K.) 07.08.1980 --- | 1 | |
| A | PATENT ABSTRACTS OF JAPAN Band 8, Nr. 152 (M-309) (1589), 14. Juli 1984; & JP - A - 59 47073 (TOUYOU SEIKAN K.K.) 16.03.1984 ----- | 1 | |
| | | | RECHERCHIERTE SACHGEBIETE (Int. Cl.4) B 23 K 11/00 |

Der vorliegende Recherchenbericht wurde für alle Patentansprüche erstellt

| Recherchenort | Abschlußdatum der Recherche | Prüfer |
|---|---|---|
| BERLIN | 21-10-1988 | WUNDERLICH J E |